# EUROPEAN PATENT SPECIFICATION

(11) **EP 0 420 410 B1**
(45) Date of publication and mention of the grant of the patent: **11.01.1995**
(21) Application number: 90309215.3
(22) Date of filing: 22.08.1990
(51) Int. Cl.: G02B 6/44

(54) **Method and apparatus for applying adhesive to an optical fiber during winding**
Verfahren und Vorrichtung zum Aufbringen eines Klebstoffes auf eine optische Faser während eines Aufwindeprozesses
Procédé et dispositif pour fournir un adhésif sur une fibre optique pendant bobinage

(30) Priority: 27.09.1989 US 413360
(43) Date of publication of application: 03.04.1991
(73) Proprietor: Hughes Aircraft Company, Los Angeles, California 90045-0066 (US)
(72) Inventor: Bailey, Wilbur M., Tucson, Arizona 85730 (US); Hulderman, George H., Tucson, Arizona 85730 (US); Schotter, Daniel K., Tucson, Arizona 85718 (US)
(74) Representative: Colgan, Stephen James

(56) References cited:
- EP-A- 0 322 052
- EP-A- 0 385 682
- EP-A- 0 393 888
- WO-A-90/05929

## Description

### BACKGROUND OF THE INVENTION

### 1. Field of the Invention

The present invention broadly concerns winding an optical fiber to form a filament pack, and, more particularly, to applying adhesive to the optical fiber during winding.

### 2. Description of Related Art

Optical fibers and wire filaments as well, have been utilized in missiles and other airborne vehicles as a data link to interconnect onboard apparatus with launch site apparatus. In use, the optical fiber which is wound onto a canister and located aboard the vehicle has one end connected to on board electrical apparatus and the other end which extends from the vehicle connects with control apparatus at the launch site. After launch, the optical fiber unwinds from the on-board canister maintaining the data link with the launch site.

In order to insure geometric integrity and stability of the wound pack during remote storage and while on the vehicle prior to launch, it has been standard practice to apply an adhesive to the fiber either during winding or after the pack is formed. Examples of known adhesive application methods include spraying the adhesive over each layer of fiber as it was laid down, or, alternatively, applying the adhesive by the use of a syringe applicator having a closed needle-like die. There are inherent problems in spraying which results in inconsistent and non-uniform coverage as well as being relatively time consuming to employ. The syringe approach, also, although providing a more uniformly thick and consistent coating and being quicker than spraying, since it requires the fiber passing through a tube or syringe is difficult to use and necessitates the fiber being completely pulled through the applicator or being broken if the adhesive application must be interrupted or terminated ahead of time.

A substantial proportion of the overall cost of an optical fiber canister is attributable to merely winding the fiber onto the canister. Accordingly, it is advisable to be able to apply the adhesive in-line with the actual winding process so as to reduce winding costs overall.

It is, therefore, desirable to be able to provide a fully reliable adhesive coating to the fiber during winding and in such a manner as to be able to easily remove the fiber from the applicator in order to correct possible winding anomalies without having to completely dismantle the adhesive applying apparatus or break the fiber.

### SUMMARY OF THE INVENTION

A guide pulley having a grooved circumferential surface engages an optical fiber being taken off a storage spool and closely positions the fiber for winding onto a canister drum. The guide pulley is mounted onto apparatus for moving it along predetermined paths both parallel to the canister drum axis as well as vertically from the drum surface to accommodate buildup of winding layers. On the same traversing apparatus, there is provided a very fine open ended tube similar to a hypodermic syringe needle, for example, which is located just underneath and closely spaced to the underside of an optical fiber just prior to its being wound onto the canister drum. A supply of pressurized liquid adhesive passes through the tube forming a continuous supply of adhesive at its outer end which is deposited onto the drum or underlying layer, as the case may be, just under where a new winding is being applied so that the new winding will rest in an adhesively wetted area. The pressure of the adhesive is maintained such that the fiber being wound onto the drum is continuously wetted on its lower surface and in that way serves to lubricate the fiber making it easier to wind upon the canister drum, and as well provide the fiber with adhesive which sets up to form a unitary wound pack that will maintain its geometry during storage and withstand the normal vibrations and shocks encountered during pe-launch use.

### BRIEF DESCRIPTION OF THE DRAWING

In the accompanying drawing:
FIG. 1 is a perspective view of the apparatus of this invention showing winding of a canister with an optical fiber;
FIG. 2 is a side elevational view of the apparatus of FIG. 1;
FIG. 3 is an elevational, slightly enlarged, partially fragmentary view showing application of adhesive in accordance with the method of this invention; and
FIG. 4 is a schematic view of the apparatus of this invention and electrical control circuitry therefor.

### DESCRIPTION OF A PREFERRED EMBODIMENT

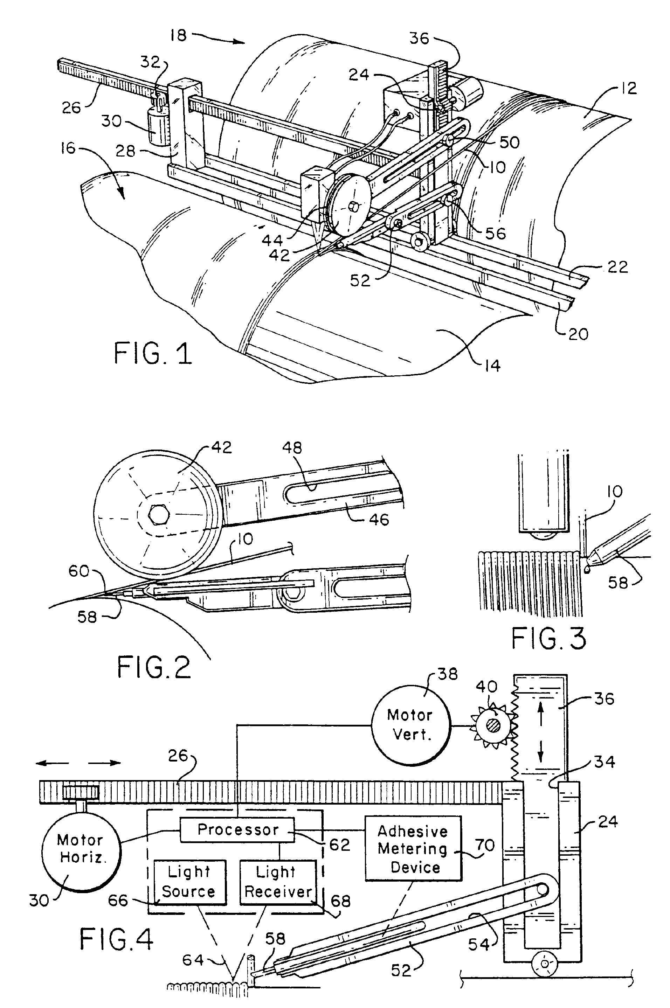

Turning now to the drawings and particularly FIG. 1, an optical fiber 10 is shown being removed from a storage spool 12 and wound onto a cylindrical canister or drum 14 for ultimate use as a missile or vehicle data link, for example. Since the wound drum 14 may have to be stored for some time, either aboard the vehicle, or at some suitable storage facility, it is customary practice to apply an adhesive to the wound pack 16 which acts to maintain the dimensional and geometric integrity of the stack. As will be more particularly described, the apparatus identified generally as 18 applies a liquid adhesive onto the fiber at the point that it is being laid down onto the drum surface or onto an underlying fiber layer on the drum, as the case may be.

The apparatus 18 for practicing the method of this invention includes a pair of elongated support rails 20 and 22 located between the storage spool 12 and drum 14, and generally parallel to the cylindrical axis of the canister drum. A vertically extending guide 24 has one end mounted onto a pair of rollers which are constructed at such geometry and dimensions as to enable receipt on the upper surfaces of the rails 20 and 22 and to roll therealong. A rack 26 has one end secured to the guide 24 and the remainder of which extends through an oversized opening in a vertically extending stanchion 28 end mounted to the rails 20 and 22. A servomotor 30 is affixed to the stanchion 28 and includes a drive gear 32 which meshes with teeth on the rack 26 for positioning the rack at any desired location horizontally along the rails 20 and 22, as will be more particularly described. Since the axis of the canister 14 is more frequently than not arranged horizontally during winding, the motor 30 will be referred to herein as the horizontal motor.

The guide 24 also includes a central slot 34 through which a further rack 36 is slidingly received. A servomotor 38 is secured to the upper end of the guide and has a drive gear 40 which meshes with the rack 36 for drivingly positioning the rack at any desired vertical position along the guide 24.

A pulley wheel 42 having a circumferential groove 44 is axially and rotatably mounted to the end of a support arm 46. An elongated slot 48 in arm 46 has a threaded member 50 enabling removable attachment of the arm to the rack 36. By virtue of the elongated slot, the arm 46 may be located at any desired angular position and spacing from the guide 24 by loosening and retightening the threaded member 50. In operation, the pulley wheel grooves 44 receives the fiber 10 therein and precisely locates the fiber during winding onto the drum 14 in a manner that will be more particularly described.

A further arm 52 has an elongated slot 54 therein similarly secured to the rack 36 below the first elongated arm 46 and adjustably secured to the rack by a threaded bolt 56. Secured to the outer end of the arm 52 is a hollow tube 58 with its longitudinal axis generally aligned to that of the arm 52, the tube opening having a cross-section in the order of 0.010 inches diameter. The tube is interconnected with a source of supply of liquid adhesive (not shown) maintaining a continuous supply at the tube outer end 60. More particularly, the adhesive volume being applied underneath a new winding is a function of the linear winding velocity.

With particular reference to FIG. 4, it is seen that the servomotor operation is under control of a processor 62 responsive to a light beam reflected from the upper surface of the pack 16 and/or drum surface. More particularly, a light beam 64 from a source 66 is directed toward the upper surface of a fiber (or, optionally, a groove between adjacent fibers) which reflects to a light detector 68 where a signal is generated that is entered into the processor 62. The processor generates drive signals for both the horizontal and vertical motors to effecting both proper tracking of the winding in the current layer and raising the winding apparatus to accommodate the addition of layers. In addition, the processor controls an adhesive metering device 70 such that adhesive is continuously provided to the tube 58 in accordance with winding speed so that a very small amount of adhesive will be laid down underneath a new winding onto the drum or underlying winding, as the case may be. Winding a fiber onto a wet bead of adhesive also provides lubricity aiding uniform placement of the fiber. In initially setting up the equipment, the operator may have to make manual adjustments to optimize adhesive application rate for current operating circumstances (e.g. canister configuration, relative humidity, adhesive used).

In practicing the method of this invention by the disclosed apparatus, the horizontal rack 26 is positioned at one end of the drum 14 and the vertical rack 36 is adjusted to the position for winding the first (lowermost) layer. A length of fiber 10 pulled off the storage spool has its end anchored to the drum and the fiber is threaded along the pulley groove. With apparatus calibrated as required for current conditions, winding is begun which consists essentially of the fiber being placed at a precise location on the drum by the pulley wheel 42 under the control of the horizontal servomotor which incrementally moves the pulley wheel longitudinally of the drum. At the same time, adhesive is metered from the tube 58 onto the drum surface (or fiber layer) immediately under the fiber leaving the pulley wheel. Winding in this way continues to finish a winding layer when the vertical servomotor moves the pulley and adhesive tube radially outward for a new layer, and a new winding is laid down in reverse direction.

In accordance with the method of this invention as performed by the described apparatus, a continuous narrow strip or bead of adhesive is deposited onto the drum or underlying winding layer just as a new winding is about to be laid down. The strip or bead has a width approximately the same as that of the filament.

Although the present invention is described in connection with a preferred embodiment, it is to be understood that those skilled in the appertaining art could utilize modifications without departing from the spirit of the invention as described herein and defined in the appended claims. For example, as described, the dispensing apparatus and pulley 42 are moved horizontally and vertically while the drum 14 is stationary. However, it is contemplated that the dispensing apparatus and pulley can be held stationary and the drum moved horizontally and vertically the required amount with equally advantageous results.

## Claims

1. Method of forming a filament wound pack on a drum with adjacent winding layers releasably adhered to one another, comprising the steps of:
axially rotating the drum with an end of the filament secured thereto to wind the filament on the drum; and
continuously wetting the surface of the underlying winding with a liquid adhesive just under and immediately prior to a filament winding being laid down.

2. Method as in claim 1, in which the adhesive is laid down in a beadlike strip having a width approximately equal to that of the filament.

3. Method as in claim 1, in which the adhesive is provided to the underlying window in an amount functionally related to the filament winding linear velocity.

4. Method as in claim 1, in which the wetting with adhesive is accomplished by locating the open end of a tube underneath a filament about to be wound onto the drum, pressurizing adhesive through the tube to be deposited onto the underlying winding.

5. Method as in claim 4, including the further step of establishing a relative movement parallel to the drum axis between the drum and the tube in a direction to advance the drum wetting in synchronism with filament winding.

6. Apparatus for applying a liquid adhesive while an optical fiber is being wound onto a drum from a storage spool, comprising:
a pulley wheel guiding the fiber toward the drum;
a hollow tube mounted with an end located between the optical fiber and the drum at a point after it has been guided by the pulley wheel and before the said fiber is wound onto the drum; and
a source of pressurized liquid adhesive connected to the other tube end providing a minimal amount of adhesive to continuously wet the underlying surface on which the fiber is being wound.

7. Apparatus as in claim 6, in which the pulley wheel has a circumferential groove within which the fiber is received.

8. Apparatus as in claim 6, in which the tube and pulley wheel are unitarily mounted, and means for providing relative movement between the drum and the unitary pulley wheel and tube radially of the drum and along a path parallel to the drum axis.

9. Apparatus as in claim 8, in which the tube and pulley wheel are adjustably positionable with respect to each other.

10. Apparatus as in claim 6, in which means interconnect the tube and pressurized adhesive source for supplying adhesive in a continuous beadlike strip from the tube end.

11. Apparatus as in claim 10, in which said means supplies adhesive in an amount functionally related to the fiber winding velocity.

12. Apparatus as in claim 10, in which the strip is of a width approximately equal to that of the fiber.

## Patentansprüche

1. Verfahren zum Bilden einer gewickelten Faserpackung auf einer Trommel, wobei einander benachbarte Wicklungsschichten lösbar aneinander geheftet werden, mit den folgenden Schritten:
axiales Drehen der Trommel, wobei ein Ende der Faser hieran festgelegt ist, um die Faser auf die Trommel zu wickeln; und
kontinuierliches Benetzen der Oberfläche der darunterliegenden Wicklung mit einem flüssigen Klebstoff knapp unterhalb und unmittelbar vor dem Ablegen einer Faserwicklung.

2. Verfahren nach Anspruch 1, wobei der Klebstoff in einem bettartigen Streifen abgelegt wird, der eine Breite hat, die annähernd derjenigen der Faser ist.

3. Verfahren nach Anspruch 1, wobei der Klebstoff auf die darunterliegende Wicklung in einer Menge aufgebracht wird, welche funktionell der linearen Faserwicklungsgeschwindigkeit zugeordnet ist.

4. Verfahren nach Anspruch 1, wobei das Benetzen mit Klebstoff bewerkstelligt wird durch Anordnen des offenen Endes einer Röhre unterhalb einer Faser, die auf die Trommel gewickelt werden soll und durch Drücken des Klebstoffes durch die Röhre, um diesen auf der darunterliegenden Wicklung abzulegen.

5. Verfahren nach Anspruch 4, weiterhin mit dem Schritt des Bewirkens einer Relativbewegung parallel zu der Trommelachse zwischen der Trommel und der Röhre in einer Richtung derart, daß das Benetzen der Trommel synchron mit dem Faserwickeln fortschreitet.

6. Vorrichtung zum Aufbringen eines flüssigen Klebstoffes, während eine optische Faser auf eine Trommel von einer Vorratsspule her aufgewickelt wird, mit:
einem Führungsrad, das die Faser in die Richtung der Trommel führt;
einer hohlen Röhre, die so angeordnet ist, daß ein Ende hiervon zwischen der optischen Faser und der Trommel an einem Punkt angeordnet ist, nach dem diese von dem Führungsrad geführt wurde und bevor die Faser auf die Trommel gewickelt wird; und
einer Quelle eines unter Druck stehenden flüssigen Klebstoffes, der mit dem anderen Röhrenende verbunden ist und eine minimale Menge von Klebstoff erzeugt, um die darunterliegende Oberfläche, auf welche die Faser aufzuwickeln ist, kontinuierlich zu benetzen.

7. Vorrichtung nach Anspruch 6, wobei das Führungsrad eine umfangseitige Ausnehmung hat, in welcher die Faser gehalten ist.

8. Vorrichtung nach Anspruch 6, wobei die Röhre und das Führungsrad zusammen angeordnet sind und Mittel vorgesehen sind, um eine Relativbewegung zwischen der Trommel und der Einheit aus Führungsrad und Röhre radial zur Trommel und entlang eines Pfades parallel zu der Trommelachse zu erzeugen.

9. Vorrichtung nach Anspruch 8, wobei die Röhre und das Führungsrad einstellbar relativ zueinander anordenbar sind.

10. Vorrichtung nach Anspruch 6, wobei Mittel vorgesehen sind zur Verbindung der Röhre und der Quelle von unter Druck stehendem Klebstoff, um den Klebstoff in einem kontinuierlichen bettartigen Streifen von dem Röhrenende abzugeben.

11. Vorrichtung nach Anspruch 10, wobei die Mittel den Klebstoff in einer Menge zuliefern, der funktionell der Faserwickelgeschwindigkeit zugeordnet ist.

12. Vorrichtung nach Anspruch 10, wobei der Streifen eine Breite hat, welche im wesentlichen gleich derjenigen der Faser ist.

## Revendications

1. Procédé destiné à former une bobine de fil sur un tambour, les couches adjacentes de bobinage adhérant les unes aux autres tout en étant détachables, comprenant les étapes consistant à:
tourner axialement le tambour, une extrémité du fil y étant fixée afin d'enrouler le fil sur le tambour; et
mouiller continûment la surface du bobinage sous-jacent à l'aide d'un adhésif liquide juste sous, et immédiatement avant, un bobinage de fil en cours.

2. Procédé selon la revendication 1, dans lequel l'adhésif est posé en une bande de type à bourrelet ayant une largeur égale environ à celle du fil.

3. Procédé selon la revendication 1, dans lequel l'adhésif est alimenté dans l'espace sous-jacent en une quantité qui est fonction de la vitesse linéaire de bobinage du fil.

4. Procédé selon la revendication 1, dans lequel le mouillage à l'aide d'un adhésif s'accomplit en positionnant l'extrémité ouverte d'un tube sous le fil devant être enroulé sur le tambour et en mettant sous pression l'adhésif à travers le tube afin qu'il soit déposé sur le bobinage sous-jacent.

5. Procédé selon la revendication 4, comprenant l'étape supplémentaire consistant à établir un mouvement relatif parallèle à l'axe du tambour, entre le tambour et le tube selon une direction qui fasse avancer de façon synchrone le mouillage du tambour et le bobinage du fil.

6. Appareil destiné à appliquer un adhésif liquide alors qu'une fibre optique est en train d'être enroulée sur un tambour à partir d'une bobine de stockage, comprenant:
une roue de poulie guidant la fibre vers le tambour;
un tube creux dont une extrémité est située entre la fibre optique et le tambour en un point, après qu'elle a été guidée par la roue de poulie et avant que ladite fibre ait été enroulée sur le tambour; et
une source d'adhésif liquide sous pression connectée à l'autre extrémité du tube et fournissant une quantité minimale d'adhésif en vue de mouiller continûment la surface sous-jacente sur laquelle la fibre est en train d'être enroulée.

7. Appareil selon la revendication 6, dans lequel la roue de poulie posséde une rainure circonférentielle au sein de laquelle la fibre est reçue.

8. Appareil selon la revendication 6, dans lequel le tube et la roue de poulie sont montés de façon unitaire, et des moyens sont prévus pour réaliser un mouvement relatif entre le tambour et la roue de poulie et le tube unis, selon les rayons du tambour et selon une trajectoire parallèle à l'axe du tambour.

9. Appareil selon la revendication 8, dans lequel le tube et la roue de poulie peuvent être positionnés de façon réglable l'un par rapport à l'autre.

10. Appareil selon la revendication 6, dans lequel des moyens interconnectent le tube et la source d'adhésif sous pression afin d'alimenter l'adhésif en une bande de type à bourrelet continue à partir de l'extrémité du tube.

11. Appareil selon la revendication 10, dans lequel lesdits moyens alimentent l'adhésif en une quantité qui est fonction de la vitesse de bobinage de la fibre.

12. Appareil selon la revendication 10, dans lequel la bande a une largeur égale environ à celle de la fibre.
